# EUROPÄISCHE PATENTSCHRIFT

(11) **EP 1 485 653 B1**
(45) Veröffentlichungstag und Bekanntmachung des Hinweises auf die Patenterteilung: **30.11.2005**
(21) Anmeldenummer: 03714817.8
(22) Anmeldetag: 13.03.2003
(51) Int. Cl.: F24C 7/08

(54) **VERFAHREN ZUM FüHREN EINES GARPROZESSES MIT EINEM GARPROZESSFÜHLER**
METHOD FOR CONDUCTING A COOKING PROCESS USING A COOKING PROCESS SENSOR
PROCEDE DE COMMANDE D'UN PROCESSUS DE CUISSON A L'AIDE D'UN CAPTEUR DE PROCESSUS DE CUISSON

(30) Priorität: 15.03.2002 DE 10211643
(43) Veröffentlichungstag der Anmeldung: 15.12.2004
(73) Patentinhaber: Rational AG, 86899 Landsberg/Lech (DE)
(72) Erfinder: FINK, Michael, 82234 Wessling (DE); FUNK, Gerd, 86899 Landsberg (DE)
(74) Vertreter: Weber-Bruls, Dorothée
(86) Internationale Anmeldenummer: PCT/EP2003/002604
(87) Internationale Veröffentlichungsnummer: WO 2003/078899

(56) Entgegenhaltungen:
- EP-A- 1 271 061
- WO-A-02/47522
- GB-A- 2 355 805

## Beschreibung

Die Erfindung betrifft ein Verfahren zum Führen eines Garprozesses in einem Garraum eines Gargerätes mit einem zumindest teilweise in ein Gargut im Garraum zum Erfassen zumindest einer Gargutgröße einzusteckenden Garprozeßfühler, sowie ein Gargerät, insbesondere zum Durchführen desselben.

Garprozeßfühler werden zur Führung eines Garprozesses in steigender Zahl eingesetzt. Beispielsweise aus der DE 299 23 215.8 ist ein Garprozeßfühler bekannt. Um die dort erwähnten Führungsmöglichkeiten eines Garprozesses ausschöpfen zu können, ist es Voraussetzung, daß der Garprozeßfühler tatsächlich im Gargut eingesteckt ist Befindet sich der Garprozeßfühler nämlich außerhalb des Gargutes, so kann das Garergebnis erheblich verschlechtert werden, da der Garprozeßfühler keine tatsächlichen Gargutinformationen aufnimmt. In der nicht vorveröffentlichten DE 100 61 821.9-34, wird sich bereits mit der Problematik einer Erfassung einer fehlenden Stechung auseinandergesetzt. Dabei werden die Sensoren des Garprozeßfühlers erfaßten Temperaturverläufe ausgewertet, was zwar zu zufriedenstellenden Ergebnissen führt, jedoch eine komplizierte Software benötigt.

Aus dem Stand der Technik sind weitere Verfahren zur Erkennung einer unsachgemäßen Anwendung eines Garprozeßfühlers bekannt. So ist aus der DE 3104 926 C2 eine Steuereinrichtung für Koch-, Brat- oder Backvorgänge mit einem Speisethermometer bekannt. Dieses Speisenthermometer umfaßt neben einem einen Temperaturfühler aufweisenden Fühlerteil eine Indikationseinrichtung, mittels der der Widerstand eines Garguts gemessen und mit einem vorgegebenen Bezugswert verglichen wird. Überschreitet dabei die Differenz zwischen dem gemessenen Widerstandswert und dem Bezugswert einen vorgegebenen Schwellenwert, so wird geschlußfolgert, daß sich der Garprozeßfühler nicht im Gargut befindet und der Garprozeß abgebrochen. Nachteilig bei dem in dieser Einrichtung verwendeten Verfahren ist jedoch, daß es zu Fehlindikationen kommen kann. So können Verschmutzungen auf der Indikationseinrichtung dazu führen, daß die Differenz zwischen dem gemessenen Widerstandswert und dem Bezugswert unterhalb des vorgegebenen Schwellenwertes liegt, obwohl sich der Temperaturfühler nicht innerhalb eines Garguts befindet Dies kann zu einem unerwünschten Garergebnis führen.

Ferner sind Gargeräte bekannt, bei denen eine Fehlstechung eines Garprozeßfühlers dadurch erkannt wird, daß eine über den Garprozeßfühler gemessene Temperatur mit einer in einem Garraum vorherrschenden Temperatur verglichen wird. Liegt die Differenz dieser beiden gemessenen Temperaturen unterhalb eines vorgegebenen Wertes, wird davon ausgegangen, daß der Garprozeßfühler nicht richtig in das Gargut eingeführt wurde. Nachteilig bei dem in diesen Gargeräten verwendeten Verfahren ist jedoch, daß bei einer Delta-Messung, d.h. dem Nachführen der Garraumtemperatur in Abhängigkeit von der über den Garprozeßfühler aufgenommenen Temperatur, eine Fehlstechung des Garprozeßfühlers möglicherweise nicht erkannt wird.

Es ist beispielhaft auf die nicht vorveröffentlichte WO 02/47522 A2 der Anmelderin zu verweisen, gemäß der Temperaturverläufe einer Oberflächentemperatur eines Garguts über einen Garprozeßfühler und einer Kerntemperatur des Gargutes über den Garprozeßfühler und/oder einer Garraumtemperatur ermittelt werden, um eine fehlenden Stechung des Garprozeßfühlers mittels der aufgenommenen Temperaturverläufe zu bestimmen. Aufgrund der Notwendigkeit der Erfassung von Temperaturverläufen kann es dabei zu einem Zeitversatz bei der Erkennung einer fehlenden Stechung kommen, was sich negativ auf ein Garergebnis auswirken kann.

Auch der ebenfalls nicht vorveröffentlichten EP 1 271 061 A2 liegt die Erkenntnis zugrunde, dass über temperaturbezogene Informationen eines Garprozeßfühlers eine fehlende Stechung erkannt werden kann, was somit mit den gleichen Nachteile wie das Verfahren der WO 02/47522 A2 einhergeht

Schließlich befinden sich auch Geräte zur Gargutbehandlung auf dem Markt, bei denen ein Garprozeßfühler eingesetzt wird, dessen Anschlußbuchse zur Verkabelung mit dem Gargerät außerhalb des Gargeräts angeordnet ist. Wird der Garprozeßfühler nicht verwendet, so wird der Anschlußstecker durch eine Abdeckung verschlossen. Ein Garprozeß mit Garprozeßfühlerleitung kann nur gestartet werden, wenn der Garprozeßfühler über den Anschluß mit dem Gargerät verbunden ist. Nachteilig bei diesen Gargeräten ist jedoch, daß ein Benutzer den Garprozeß, trotz Anschluß des Garprozeßfühlers an ein Gargerät, starten kann, selbst wenn der Garprozeßfühler nicht in ein Gargut gesteckt worden ist.

Aufgabe der vorliegenden Erfindung ist es daher, das gattungsgemäße Verfahren derart weiterzuentwickeln, daß die Nachteile des Stands der Technik überwunden werden. Ferner soll ein gegenüber dem Stand der Technik verbessertes Gargerät zur Durchführung in einem solchen Verfahren geliefert werden.

Die das Verfahren betreffende Aufgabe wird erfindungsgemäß dadurch gelöst, daß zu zumindest einem vorherbestimmten Zeitpunkt automatisch eine Abfrage zur Erfassung einer fehlenden Stechung des Garprozessfühlers abläuft, bei der
- zumindest ein Leitwert, ein Widerstandswert, ein Induktionswert, ein Kapazitäts Druckcharakteristik und/oder eine Charakteristik eines elektrischen, magnetischen oder elektromagnetischen Feldes erfasst wird bzw. werden zur Abfrage, ob sich der Garprozessfühler in einer von dem Gargerät bereitgestellten Aufnahmevorrichtung in Warteposition oder in einer von einem Zubehörteil zur Aufnahme des Garguts bereitgestellten Positioniervorrichtung in Meßposition befindet, und/oder
- zumindest ein Leitwert, ein Widerstandswert, ein Induktionswert, ein Kapazitäts
   wert, ein Potentialdifferenzwert, ein Gewichtswert, ein Feuchtewert, eine Strah lungscharaktenstik, eine Druckcharakteristik und/oder eine Charakteristik eines elektrischen, magnetischen oder elektromagnetischen Feldes erfasst wird bzw. wer den zur Abfrage, ob der Garprozessfühler aus der Aufnahmevorrichtung oder der Positioniervorrichtung entfernt wird, und/oder
- Strahlungscharakteristiken und/oder eine Charakteristik eines elektrischen, magnetischen oder elektromagnetischen Feldes erfasst wird bzw. werden zur Abfrage, ob der Garprozessfühler bewegt wird und/oder wo sich der Garprozessfühler im Gargerät befindet, und/oder
- zumindest ein Leitwert, ein Widerstandswert, ein Induktionswert, ein Kapazitätswert, ein Potentialdifferenzwert, ein Feuchtewert eine Stahlungscharakteristik, eine Druckcharakteristik und/oder eine Charakteristik einer elektrischen, magnetischen oder elektromagnetischen Feldes erfasst wird bzw. werden zur Abfrage, ob der Garprozessfühler angefasst wird, und
bei erfasster fehlender Stechung zumindest ein erstes Warnsignal ausgesandt, zu einem Notprogramm gewechselt und/oder das Garprogramm abgebrochen wird.

Dabei kann ferner vorgesehen sein, daß zur Erfassung einer fehlenden Stechung des Garprozeßfühlers abgefragt wird, ob der Garprozeßfühler mit dem Gargerät verbunden ist.

Eine besonders vorteilhafte alternative Ausführungsform des Verfahrens ist dadurch gekennzeichnet, daß der vorherbestimmte Zeitpunkt durch Beginn eines Garprozesses, Ende eines Garprozesses und/oder Betätigen, insbesondere Öffnen oder Schließen, einer Garraumtür, bestimmt wird.

In dem Verfahren kann insbesondere vorgesehen sein, daß die Erfassung über die Zeit und/oder mit zeitlicher Ableitung durchgeführt wird.

Eine weitere vorteilhafte Ausführungsform des Verfahrens sieht vor, daß zur Erfassung einer fehlenden Stechung des Garprozeßfühlers zumindest eine über den Garprozeßfühler erfaßte Gargutgröße, ein zeitlicher Verlauf der Gargutgröße und/oder zumindest eine Ableitung des zeitlichen Verlaufs der Gargutgröße nach der Zeit ermittelt wird bzw. werden, wobei vorzugsweise die ermittelte Gargutgröße, der ermittelte zeitliche Verlauf und/oder die ermittelte Ableitung mit zumindest einem Soll-Wert verglichen wird bzw. werden.

Schließlich kann in dem Verfahren vorgesehen sein, daß in Abhängigkeit von dem Garprozeß ein zweites Warnsignal ausgesandt wird, wenn der Garprozeßfühler nicht in der Aufnahmevorrichtung plaziert ist, um eine Bedienperson aufzufordern, den Garprozeßfühler in die Aufnahmevorrichtung zu plazieren, und/oder ein drittes Warnsignal ausgesandt wird, wenn der Garprozeßfühler nicht in der Positioniervorrichtung plaziert ist, um eine Bedienperson aufzufordern, den Garprozeßfühler in die Positioniervorrichtung zu plazieren.

Ferner betrifft die Erfindung ein Gargerät, insbesondere zum Durchführen eines Verfahrens nach einem der vorangehenden Ansprüche, mit einem Garraum und einem zumindest teilweise in ein Gargut im Garraum zum Erfassen zumindest einer Gargutgröße einsteckbaren Garprozeßfühler, dadurch gekennzeichnet, daß fehlende Stechung des Garprozeßfühlers in das Gargut erfaßbar ist unter Einsatz von
- elektrischen Kontakten, einem Kontaktsensor, einem Drucksensor, einer Lichtschranke, einem Ultraschallsensor, einem Reedkontakt, einem Lichtsensor und/oder einem Leitfähigkeitssensor zur Abfrage, ob sich der Garprozessfühler in einer von dem Gargerät bereitgestellten Aufnahmevorrichtung in Warteposition oder in einer von einem Zubehör zur Aufnahme des Garguts bereitgestellten Positioniervorrichtung in Meßposition befindet, und/oder
- elektrischen Kontakten, einem Kontaktsensor, einem Drucksensor, einer Lichtschranke, einem Ultraschallsensor, einem Reedkontakt, einem Lichtsensor und/oder einem Leitfähigkeitssensor zur Abfrage, ob der Garprozessfühler aus der Aufnahmevorrichtung oder der Positioniervorrichtung entfernt worden ist, und/oder
- einer Lichtschranke, einem Ultraschallsensor, einem Ortungssystem, einem Bewegungssensor und/oder einem Lichtsensor zur Abfrage, wo sich der Garprozessfühler innerhalb des Gargeräts befindet oder ob der Garprozessfühler bewegt worden ist, und/oder
elektrischen Kontakten, einem Kontaktsensor, einem Drucksensor, einer Lichtschranke, einem Ultraschallsensor, einem Lichtsensor, einem Leitfähigkeitssensor und/oder einem Feuchtesensor zur Abfrage, ob der Garprozessfühler angefasst worden ist, und bei erfasster Fehlstechung zumindest ein erstes Warnsignal aussendbar, zu einem Notprogramm wechselbar und/oder das Garprogramm abbrechbar ist zum Führen eines Garprozesses.

Dabei kann insbesondere vorgesehen sein, daß der Sensor von der Aufnahmevorrichtung, der Positioniervorrichtung und/oder dem Garprozeßfühler umfaßt ist.

Ein erfindungsgemäßes Gargerät kann ferner gekennzeichnet sein durch eine Eingabe- und/oder Ausgabeeinheit und/oder eine Steuer- und/oder Regeleinheit in Wirkverbindung mit dem Garprozeßfühler, einer Gamaumtür, dem Sensor, der Aufnahmevorrichtung und/oder Positioniervorrichtung

Vorteilhalterweise ist vorgesehen, daß der Garprozeßfühler unverlierbar mit dem Gargerät verbunden ist.

Schließlich ist eine besonders vorteilhafte Ausführungsform des Gargeräts gekennzeichnet durch eine Kühlvorrichtung, zumindest zeitweise in Wirkverbindung mit dem Garprozeßfüh-1er und/oder der Aufnahmevorrichtung, zum zumindest bereichsweisen Kühlen des Garprozeßfühlers.

Der Erfindung liegt somit die überraschende Erkenntnis zugrunde, daß ein Verfahren zur Erkennung einer unsachgemäßen Anwendung eines Garprozeßfühlers, insbesondere ein nicht erfolgtes Einstechen desselben in ein Gargut derart ausgeführt werden kann, daß zu Beginn eines Garprozesses ohne Zeitverzögerung eine unsachgemäße Anwendung erkannt werden kann, wobei eine Umgehung der Erkennung durch einen Benutzer zumindest erschwert wird. Insbesondere durch die Verwendung einer erfindungsgemäßen Aufnahmevorrichtung für den Garprozeßfühler in der Gestalt, daß über das Anlegen einer Spannung bzw. einer Leitwertmessung ermittelt werden kann, ob sich der Garprozeßfühler in der Aufnahme befindet oder nicht, bzw. aus dieser entfernt bzw. nicht entfernt wurde, ermöglicht eine derartige Erkennung. Insbesondere durch Vergleich der Uhrzeit der Entnahme und dem Start eines zeitlich vor- oder nachgelagerten Prozesses ermöglicht es, daß ein Setzen des Garprozeßfühlers bzw. ein Vergessen desselben als sicher angenommen und somit eine unsachgemäße Anwendung des Garprozeßfühlers erkannt werden kann. Insbesondere die Kombination verschiedener Handhabungen des Garprozeßfühlers neben der Erkennung, ob der Garprozeßfühler aus seiner Halterung herausgenommen wurde, also angefaßt, bewegt an einer beliebigen Stelle positioniert wurde und/oder in eine Garprozeßfühlerhalterung eines Zubehörteils eingebracht wurde, ermöglicht eine im wesentlichen sichere Erkennung einer unsachgemäßen Anwendung des Garprozeßfühlers.

Weitere Merkmale und Vorteile der Erfindung ergeben sich aus der nachstehenden Beschreibung, in der bevorzugte Ausführungsformen der Erfindung beispielhaft anhand schematischer Zeichnungen im Einzelnen erläutert sind. Dabei zeigt:
- Figur 1: ein erfindungsgemäßes Gargerät;
- Figur 2: eine erste erfindungsgemäße Ausführungsform einer Aufnahmevorrichtung für einen Garprozeßfühler als Teil des Gargeräts der Figur 1;
- Figur 3: eine zweite Ausführungsform einer erfindungsgemäßen Aufnahmevorrichtung;
- Figur 4: eine dritte Ausführungsform einer erfindungsgemäßen Aufnahmevorrichtung;
- Figur 5: eine vierte Ausführungsform einer erfindungsgemäßen Aufnahmevorrichtung;
- Figur 6: eine fünfte Ausführungsform einer erfindungsgemäßen Aufnahmevorrichtung; und
- Figur 7: einen Garprozeßfühler für das Gargerät der Figur 1.

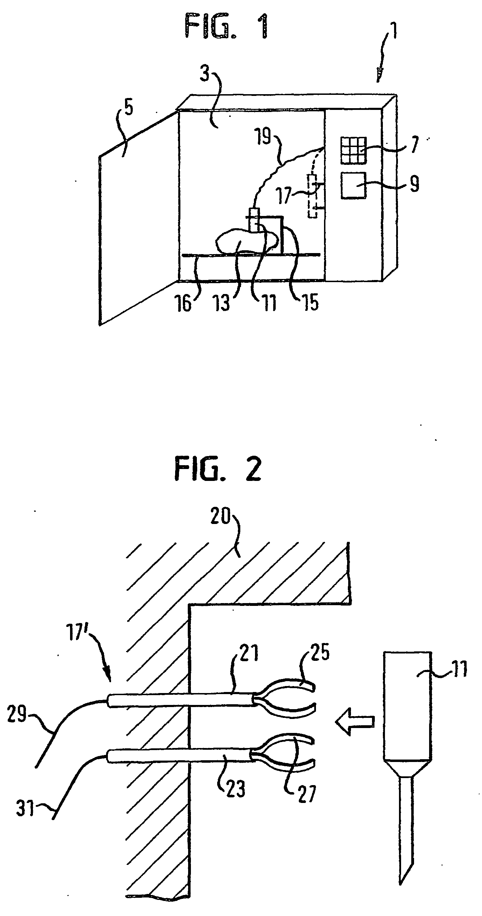

In Figur 1 ist ein erfindungsgemäßes Gargerät 1 mit einem Garraum 3, der über eine Garraumtür 5 verschließbar ist, dargestellt. Ferner umfaßt das Gargerät 1 eine Eingabeeinheit 7, über die ein Benutzer das Gargerät 1 bedienen kann. Insbesondere kann ein Benutzer über die Eingabeeinheit 7 einen Garprozeß programmieren, starten, beenden oder während eines Garprozesses einzelne Garparameter abändern. Über eine Ausgabeeinheit 9 können einem Benutzer Informationen über das Gargerät 1, ein Gargut und/oder einen Garprozeß gegeben werden.

Hierzu umfaßt die Ausgabeeinheit 9 ein Display zur Anzeige von Garparmetern und/oder eine akustische. Ausgabeeinheit zur Erzeugung von Warn- und/oder Informationssignalen, Das Gargerät 1 umfaßt ferner einen Garprozeßfühler 11, der über ein Kabel 19 nichtverlierbar mit dem Gargerät 1, im Garraum 3, verbunden ist. Durch diese Verbindung kann der Garprozeßfühler 11 im Normalbetrieb nicht vom Gargerät 1 entfernt werden. Zur Durchführung eines Garprozesses wird der Garprozeßfühler 11 in ein Gargut 13, wie einen Braten, eingesteckt, insbesondere um zumindest eine Kerntemperatur und gegebenenfalls eine Oberflächentemperatur des Garguts 13 aufzunehmen, wobei diese Temperaturwerte zur Steuerung des folgenden Gupozesses genutzt werden. Eine Positionierung des Garprozeßfühlers 11 kann bedarfweise über eine Positioniervorrichtung 15 erfolgen, die beispielsweise fest verbindbar mit einem Zubehörteil 16 in Form eines Blechs zum Tragen des Garguts 13 ist Wird der Garprozeßfühler 11 nicht benutzt, insbesondere wenn kein Garprozeß durchgeführt wird, so kann er von einem Benutzer in einer fest mit dem Garraum 3 verbundenen Aufnahmevorrichtung 17 in einer Warteposition abgelegt werden. Die Position des Garprozeßfühlers 11 in der Aufnahmevorrichtung 17 ist in Figur 1 gestrichelt dargestellt.

Obwohl die Aufnahmevorrichtung 17 in Figur 1 innerhalb des Garraums 3 dargestellt ist, und der Garprozeßfühler über ein Kabel 19 mit dem Gargerät 1 verbunden ist; kann die Aufnahmevorrichtung an einer beliebigen Position des Gargeräts angeordnet und der Garprozeßfühler drahtlos mit dem Gargerät zur Übermittlung von Gargutdaten verbunden sein. Die nicht Velierbarkeit des Garprozeßfühlers wird dann dadurch erreicht, daß bei Entfernung des Garprozeßfühlers vom Gargerät ein Warnton über die Ausgabeeinheit ausgegeben wird.

Das Gargerät 1, umfaßt ferner eine nicht dargestellte Regeleinheit, durch die u.a. ein in dem Gargerät 1 durchgeführter Garprozeß geregelt wird. Diese Regelung des Garprozesses umfaßt auch das erfindungsgemäße Verfahren, mit dem eine unsachgemäße Anwendung des Garprozeßfuhlers erkennbar ist Dabei wird berücksichtigt, daß ein Benutzer bei Durchführung eines Garprozesses mit dem Garprozeßfühler 11 im wesentlichen vorbestimmte Eingriffe an dem Gargerät 1, insbesondere an dem Garprozeßfühler 11, vornehmen sollte. Vor Beginn eines Garprozesses sollte nämlich ein Benutzer zunächst die Garraumtür 5 öffnen und das Gargut 13 innerhalb des Garraums 3 positionieren. Anschließend sollte der Benutzer den Garprozeßfühler 11 aus der Aufnahmevorrichtung 17 entnehmen und in das Gargut 13 einstechen, insbesondere über die Positioniervorrichtung 15. Anschließend sollte der Benutzer den Garraum 3 mittels der Garraumtür 5 schließen und den Garprozeß über die Eingabeeinheit 7, gegebenenfalls zeitverzögert, starten. Während des folgenden Garprozesses sollte der Garprozeßfühler 11 im wesentlichen bewegungslos im Gargut 13 verbleiben und erst nach Beendigung des Garprozesses und Öffnen der Garraumtür 5 durch den Benutzer angefaßt, gegebenenfalls aus der Positioniervorrichtung 15 entnommen und in die Aufnahmevorrichtung 17 eingesetzt werden. Bei Nicht-Erfolgung dieser Soll-Handhabungen des Garprozeßfühlers während eines Garprozesses kann es zu schlechten bis schädlichen Garergebnissen kommen.

Das erfindungsgemäße Verfahren bietet nun die Möglichkeit, das Nicht-Erfolgen zumindest einer Soll-Handhabung oder einer Fehl-Handhabung, die für eine sachgemäße Anwendung desselben notwendig ist, zu erkennen und darauf zu reagieren, wie durch Aussendung von Warnsignalen, Wechseln zu einem Notprogramm oder Abbruch eines Garprozesses.

Eine erste Soll-Handhabung des Garprozeßfühlers 11 besteht z.B. in der Entnahme des Garprozeßfühlers 11 aus der Aufnahmevorrichtung 17, die selbstverständlich voraussetzt, daß sich der Garprozeßfühler 11 zunächst in der Aufnahmevorrichtung 17 befindet. Befindet sich der Garprozeßfühler 11 zu Beginn eines Garprozesses noch in der Aufnahmevorrichtung 17, kann jedoch stets direkt auf eine unsachgemäße Anwendung des Garprozeßfühlers 11 geschlossen werden. Ferner kann beispielsweise auch auf eine unsachgemäße Anwendung des Garprozeßfühlers 11 geschlossen werden, wenn die Entnahme des Garprozeßfühlers 11 aus der Aufnahmevorrichtung 17 außerhalb eines bestimmten Zeitraums vor dem Beginn des Garprozesses oder der Programmierung des Gaprozesses bzw. dem Schließen der Garraumtür 5 erfolgt ist. In einem solchen Fall ist davon anszugehen, daß der Garprozeßfühler 11 nicht in das Gargut 13 eingesteckt wurde.

In Figur 2 ist eine erfindungsgemäße erste Ausführungsform einer Aufnahmevorrichtung 17' dargestellt. Die Aufnahmevorrichtung 17' ist an einer Gargerätewand 20 fest angebracht, und umfaßt zwei gabelförmige Halterungen 21, 23, die als "Clips" zur Aufnahme des Garprozeßfühlers 11 ausgeführt sind. Zumindest die Oberflächenbereiche der Halterungen 21, 23, der bei eingesetztem Garprozeßfühler 11, nicht gezeigt, in Kontakt mit diesem kommt, bestehen aus einem leitfähigen Material und bilden somit Kontakte 25 bzw. 27. Die restlichen Bereiche der Halterungen 21 und 23 sind vorzugsweise nach außen elektrisch isoliert. Die Kontakte 25 und 27 sind über Leitungen 29 und 31 mit der Regeleinheit so verbunden, daß sich der Kontakt 25 auf einem Potential von z.B. 12 Volt befindet, während sich der Kontakt 27 auf einem Potential von z.B. 5 Volt oder Masse befindet. Befindet sich der Garprozeßfühler 11 nicht in der Aufnahmevorrichtung 17, wie dargestellt, so kommt es zu keinem Stromfluß zwischen den Kontakten 25 und 27. Somit kann aus dem Fehlen eines Stromflusses zwischen den Kontakten 25 und 27 geschlußfolgert werden, daß sich der Garprozeßfühler 11 nicht innerhalb der Aufnahmevorrichtung 17 befindet. Wird dagegen der Garprozeßfühler 11 in die Halterungen 21 und 23 der Aufnahmevorrichtung 17 eingebracht, so kommt es über die leitfähige Oberfläche des Garprozeßfühlers 11 zu einem Stromfluß zwischen den Kontakten 25 und 27.

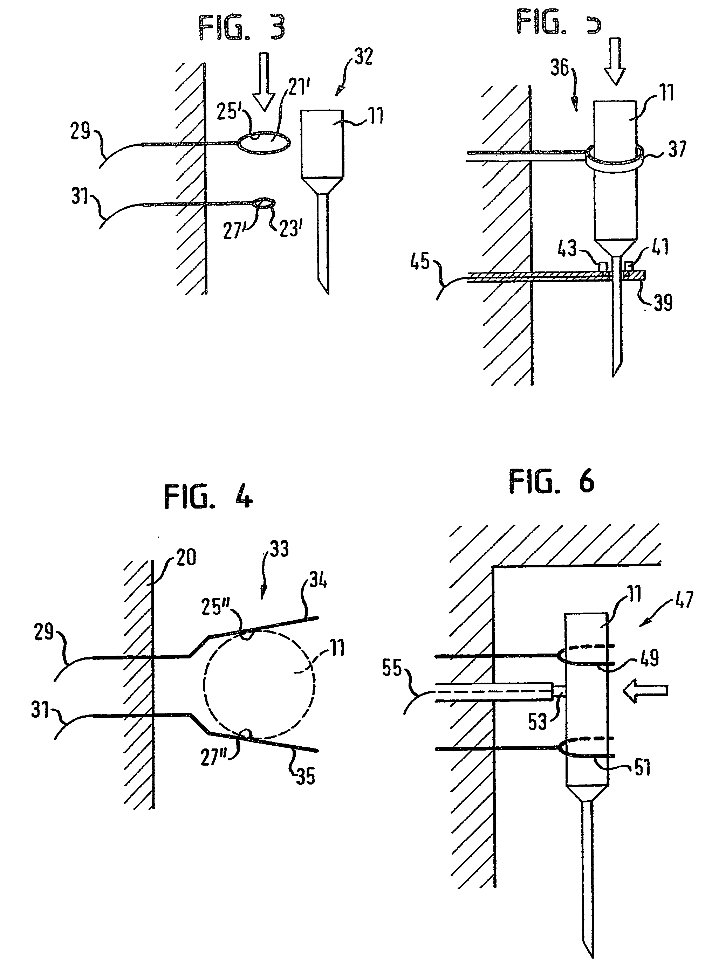

In Figur 3 ist eine zweite erfindungsgemäße Aufnahmevorrichtung 32 dargestellt. Im Gegensatz zu der in Figur 2 dargestellten ersten Aufnahmevorrichtung 17' umfaßt die zweite Aufnahmevorrichtung 32 zwei ringförmige Halterungen 21' bzw. 23'. Diese umfassen wiederum Kontakte 25' bzw. 27', die über die Leitungen 29 und 31 mit der Regeleinheit verbunden sind. Im Gegensatz zu der in Figur 2 dargestellten ersten Aufnahrnevorrichtung 17' kann der Garprozeßfühler 11 in die zweite Aufnahmevorrichtung 32 nicht "eingeclipt" werden, sondern muß von oben zunächst durch die Halterung 21' und mit der Spitze durch die Halterung 23' geführt werden. Die Kontakte 25' und 27' befinden sich auf unterschiedlichen Potentialen, so daß von einem Stromfluß zwischen den Kontakten 25' und 27' über die Oberfläche des Garprozeßfühlers 11 auf ein Vorhandensein des Garprozeßfühlers 11 in der Aufnahmevorrichtung 32 geschlossen werden kann.

In Figur 4 ist eine dritte erfindungsgemäße Aufnahmevorrichtung 33 dargestellt. An der Gargerätewand 20 ist dabei eine gabelförmige Halterung, umfassend zwei Gabeläste 34 und 35, befestigt. Die Gabeläste 34, 35 weisen Kontakte 25" und 27", die über die Leitungen 29, 31 mit der Regel verbunden sind, auf. Die Kontakte 25" und 27" befinden sich ebenfalls auf unterschiedlichen Potentialen, so daß es zu keinem Stromfluß zwischen den Kontakten 27" und 25" kommt, wenn sich der Garprozeßfühler 11 nicht innerhalb der Halterung befindet. Dagegen kommt es bei Einstechen des Garprozeßfühlers 11 in die Aufnahmevorrichtung 33 zu einem Stromfluß zwischen den Kontakten 25" und 27" über die Oberfläche des Garprozeßfühlers 11.

In Figur 5 ist eine vierte erfindungsgemäße Aufnahmevorrichtung 36 dargestellt. Diese Aufnahmevorrichtung 36 umfaßt ringförmige Halterungen 37 und 39. Im Gegensatz zu den in den Figuren 2 bis 4 dargestellten Halterugen weisen die Halterungen 37 und 39 keine Kontakte auf, sondern an der einen Halterung 39 sind Sensoren 41 und 43 angeordnet, die über eine Leitung 45 mit der Regeleinheit des Gargeräts 1 verbunden sind. Die Sensoren 41 und 43 umfassen Reedkontakte, die geschlossen werden, wenn der Garprozeßfühler 11 mit seiner Spitze durch die Halterung 37 in die Halterung 39 eingesetzt wird. Durch das Schließen der Reedkontakte wird für das erfindungsgemäße Verfahren erkannt, daß sich der Garprozeßfühler 11 in der Aufnahmevorrichtung 36 befindet.

In Figur 6 ist eine fünfte erfindungsgemäße Aufnahmevorrichtung 47 dargestellt. Diese Aufnahmevorrichtung 47 umfaßt zwei gabelförmige Halterungen 49, 51, in die der Garprozeßfühler 11 "eingeclipt" werden kann. Zwischen den Halterungen 49 und 51 ist ein Sensor 53 angeordnet. Beim Einsetzen des Garprozeßfühlers 11 in die Halterung 49 bzw. 51 wird der Kontakt des Sensors 53 geschlossen, der über eine Leitung 55 mit der Regeleinheit des Gargeräts verbunden ist. Ein Schließen des Kontaktes bedeutet, daß sich der Garprozeßfühler 11 in der Halterung 47 befindet.

Das Einführen, des Garprozeßfühlers 11 in die Positioniervorrichtung 15 stellt eine zweite Soll-Handhabung des Garprozeßfühlers 11 dar. Bleibt nämlich bei Verwendung der Positioniervorrichtung 15 ein Einführen des Garprozeßfühlers 11 in dieselbe aus, so kann ebenfalls auf eine unsachgemäße Anwendung des Garprozeßfühlers 11 geschlossen werden.

Weiterhin kann auf eine unsachgemäße Anwendung des Garprozeßfühlers 11 geschlossen werden, wenn der Garprozeßfübler 11 in dem Zeitraum, in welchem die Garraumtür 5 geöffnet, das Gargut 13 in den Garraum 3 eingebracht und die Garraumtür 5 geschlossen wird, nicht bewegt wird, da eine entsprechende Bewegung eine dritte Soll-Handhabung darstellt. Es ist dann davon auszugehen, daß der Garprozeßfühler 11 sich zwar innerhalb des Garraums 3, aber außerhalb des Garguts 13 befindet. Eine Überwachung der Bewegung des Garprozeßfühlers 11 kann entweder mittels eines in dem Garprozeßfühler 11 angeordneten Bewegungssensors (nicht gezeigt) oder in dem Gargerät 1 angeordneten elektronischen Ortungssystems für den Garprozeßfühler 11 (nicht gezeigt), erfolgen. Solch ein Ortungssystem ermöglicht es grundsätzlich ferner, festzustellen, ob sich der Garprozeßfühler 11 innerhalb oder außerhalb des Garraums 3 befindet.

Eine vierte Soll-Handhabung ist ein Anfassen des Garprozeßfühlers 11, die ebenfalls Rückschlüsse auf eine unsachgemäße Anwendung des Garprozeßfühlers 11 zuläßt. Zur Erfassung dieser Soll-Handhabung kann der Garprozeßfühler 11 z.B. einen Leitfähigkeitssensor (nicht gezeigt) umfassen, der es ermöglicht, ein Anfassen des Garprozeßfühlers 11 durch einen Benutzer festzustellen. Bleibt z.B. ein solches Anfassen während des Zeitraums, in dem die Garraumtür 5 geöffnet ist, aus, so kann ebenfalls darauf geschlossen werden, daß der Garprozeßfühler 11 nicht in das Gargut 13 eingesteckt wurde.

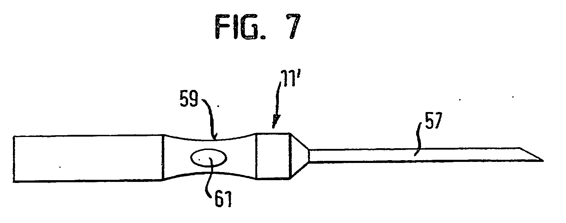

Ferner ist in Figur 7 ein erfindungsgemäßer Garprozeßfühler 11' dargestellt, der in seiner nadelförmigen Spitze 57 mehrere, nicht dargestellte Temperatursensoren, umfaßt und auf dessen Griffmulde 59 einen Leitfähigkeitssensor 61 angeordnet hat. Faßt ein Benutzer den Garprozeßfühler 11' an der Griffmulde 59 an; so berührt er den Leitfähigkeitssensor 61, der dann eine Leitfähigkeitsänderung detektiert. Diese führt zu einer Erkennung eines Anfassens des Garprozeßfühlers 11', der in dem erfindungsgemäßen Verfahren verarbeitet werden kann.

Vorteilerhafterweise ist der Garprozeßfühler über eine nicht dargestellte Kühleinrichtung kühlbar, um ein Anfassen der Griffmule 59 angenehmer zu gestalten und/oder ein Beschädigen eines Garguts durch Einführen einer heißen nadelförmigen Spitze 57 zu vermeiden.

Erfindungsgemäß kann desweiteren vorgesehen sein, daß die Positioniervorrichtung 15 zumindest eines in den Ausführungsbeispielen der Aufnahmevorrichtung dargestellten konstruktiven Merkmale aufweist.

Somit ermöglicht es das erfindungsgemäße Verfahren durch die Überwachung verschiedener Soll- bzw. Fehl-Handhabungen, insbesondere des Garprozeßfühlers 11, eine unsachgemäße Anwendung, insbesondere eine fehlende Stechnung, desselben zu erkennen.

Die in der vorstehenden Beschreibung, in den Zeichnungen sowie in den Ansprüchen offenbarten Merkmale der Erfindung einzeln, als auch in jeder beliebigen Kombination für die Verwirklichung der Erfindung in ihren verschiedenen Ausführungsformen wesentlich sein.

## Patentansprüche

1. Verfahren zum Führen eines Garprozesses in einem Garraum eines Gargerätes mit einem zumindest teilweise in ein Gargut im Garraum zum Erfassen von zumindest einer Gargutgröße einzusteckenden Garprozessfühler, **dadurch gekennzeichnet, daß** zu zumindest einem vorherbestimmten Zeitpunkt automatisch eine Abfrage zur Erfassung einer fehlenden Stechung des Garprozessfühlers abläuft, bei der
- zumindest ein Leitwert, ein Widerstandswert, ein Induktionswert, ein Kapazitäts Druckcharakteristik und/oder eine Charakteristik eines elektrischen, magnetischen oder elektromagnetischen Feldes erfasst wird bzw. werden zur Abfrage, ob sich der Garprozessfühler in einer von dem Gargerät bereitgestellten Aufnahmevorrichtung in Warteposition oder in einer von einem Zubehörteil zur Aufnahme des Garguts bereitgestellten Positioniervorrichtung in Meßposition befindet, und/oder
- zumindest ein Leitwert, ein Widerstandswert, ein Induktionswert, ein Kapazitäts
wert, ein Potentialdifferenzwert, ein Gewichtswert, ein Feuchtewert, eine Strah lungscharakteristik, eine Druckcharakteristik und/oder eine Charakteristik eines elektrischen, magnetischen oder elektromagnetischen Feldes erfasst wird bzw. werden zur Abfrage, ob der Garprozessfühler aus der Aufnahmevorrichtung oder der Positioniervorrichtung entfernt wird, und/oder
- Strahlungscharakteristiken und/oder eine Charakteristik eines elektrischen, magnetischen oder elektromagnetischen Feldes erfasst wird bzw. werden zur Abfrage, ob der Garprozessfühler bewegt wird und/oder wo sich der Garprozessfühler im Gargerät befindet, und/oder
- zumindest ein Leitwert, ein Widerstandswert, ein Induktionswert, ein Kapazitätswert, ein Potentialdifferenzwert, ein Feuchtewert, eine Strahlungscharakteristik, eine Druckcharakteristik und/oder eine Charakteristik einer elektrischen, magnetischen oder elektromagnetischen Feldes erfasst wird bzw. werden zur Abfrage, ob der Garprozessfühler angefasst wird, und
bei erfasster fehlender Stechung zumindest ein erstes Warnsignal ausgesandt, zu einem Notprogramm gewechselt und/oder das Garprogramm abgebrochen wird.

2. Verfahren nach Anspruch 1, **dadurch gekennzeichnet, daß** zur Erfassung einer fehlenden Stechung des Garprozeßfühlers abgefragt wird, ob der Garprozeßfühler mit dem Gargerät verbunden ist.

3. Verfahren nach Anspruch 1 oder 2, **dadurch gekennzeichnet, daß** der vorherbestimmte Zeitpunkt durch Beginn eines Garprozesses, Ende eines Garprozesses und/oder Betätigen, insbesondere Öffnen oder Schließen, einer Garraumtür, bestimmt wird.

4. Verfahren nach einem der vorangehenden Ansprüche, **dadurch gekennzeichnet, daß** die Erfassung über die Zeit und/oder mit zeitlicher Ableitung durchgeführt wird.

5. Verfahren nach einem der vorangehenden Ansprüche, **dadurch gekennzeichnet, daß** zur Erfassung einer fehlenden Stechung des Garprozeßfühlers zumindest eine über den Garprozeßfühler erfaßte Gargutgröße, ein zeitlicher Verlauf der Gargutgröße und/oder zumindest eine Ableitung des zeitlichen Verlaufs der Gargutgröße nach der Zeit ermittelt wird bzw. werden, wobei vorzugsweise de ermittelte Gargutgröße, der ermittelte zeitliche Verlauf und/oder die ermittelte Ableitung mit zumindest einem Soll-Wert verglichen wird bzw. werden.

6. Verfahren nach einem der vorangehenden Ansprüche, **dadurch gekennzeichnet, daß** in Abhängigkeit von dem Garprozeß ein zweites Warnsignal ausgesandt wird, wenn der Garprozeßfühler nicht in der Aufnahmevorrichtung plaziert ist, um eine Bedienperson aufzufordern, den Garprozeßfühler in die Aufnahmevorrichtung zu plazieren, und/oder ein drittes Warnsignal ausgesandt wird, wenn der Garprozeßfühler nicht in der Positioniervorrichtung plaziert ist, um eine Bedienperson aufzufordern, den Garprozeßfühler in die Positioniervorrichtung zu plazieren.

7. Gargerät (1), insbesondere zum Durchführen eines Verfahrens nach einem der vorangehenden Ansprüche, mit einem Garraum (3) und einem zumindest teilweise in ein Gargut (13) im Garraum (3) zum Erfassen zumindest einer Gargutgröße einsteckbaren Garprozeßfühler (11, 11'), **dadurch gekennzeichnet, daß** eine fehlende Stechung des Garprozeßfühlers (11, 11') in das Gargut (13) erfaßbar ist unter Einsatz von
- elektrischen Kontakten (25, 25', 25",27,27', 27"), einem Kontaktsensor, einem Drucksensor, einer Lichtschranke, einem Ultraschallsensor, einem Reedkontakt (41, 43,53), einem Lichtsensor und/oder einem Leitfähigkeitssensor (61) zur Abfrage, ob sich der Garprozessfühler (11, 11') in einer von dem Gargerät (1) bereitgestellten Aufnahmevorrichtung (17, 17') in Warteposition oder in einer von einem Zubehör (16) zur Aufnahme des Garguts (13) bereitgestellten Positioniervorrichtung (15) in Meßposition befindet, und/oder.
- elektrischen Kontakten (25, 25', 25", 27, 27', 27"), einem Kontaktsensor, einem Drucksensor, einer Lichtschranke, einem Ultraschallsensor, einem Reedkontakt (51, 53, 53), einem Lichtsensor und/oder einem Leitfähigkeitssensor (61) zur Abfrage, ob der Garprozessfühler (11, 11') aus der Aufnahmevorrichtung (17, 17') oder der Positioniervorrichtung (15) entfernt worden ist, und/oder
- einer Lichtschranke, einem Ultraschallsensor, einem Ortungssystem, einem Bewegungssensor und/oder einem Lichtsensor zur Abfrage, wo sich der Garprozessfühler (11, 11') innerhalb des Gargeräts (1) befindet oder ob der Garprozessfühler (11,11') bewegt worden ist, und/oder
- elektrischen Kontakten (25, 25', 25", 27, 27*,* 27"*),* einem Kontaktsensor, einem Drucksensor, einer Lichtschranke, einem Ultraschallsensor, einem Lichtsensor, einem Leitfähigkeitssensor (61) und/oder einem Feuchtesensor zur Abfrage, ob der Garprozessfühler (11, 11') angefasst worden ist, und bei erfasster Fehlstechung zumindest ein erstes Warnsignal aussendbar, zu einem Notprogramm wechselbar und/oder das Garprogamm abbrechbar ist zum Führen eines Garprozesses.

8. Gargerät nach Anspruch 7, **dadurch gekennzeichnet, daß** der Sensor (25, 25', 25", 27, 27', 27", 41, 43, 53, 61) von der Aufnahmevorrichtung (17, 17', 32, 33, 36, 47), der Positioniervorrichtung (15) und/oder dem Garprozeßfühler (11, 11') umfaßt ist.

9. Gargerät nach Anspruch 7 oder 8, **gekennzeichnet durch** eine Eingabe- (7) und/oder Ausgabeeinheit (9) und/oder eine Steuer- und/oder Regeleinheit in Wirkverbindung mit dem Garprozeßfühler (11, 11'), einer Garraumtür (5), dem Sensor (25, 25', 25", 27, 27', 27", 41, 43, 53, 61), der Aufnahmevorrichtung (17, 17', 32, 33, 36, 47) und/oder Positioniervorrichtung (15).

10. Gargerät nach einem der Ansprüche 7 bis 9, **dadurch gekennzeichnet, daß** der Garprozeßfühler (11, 11') unverlierbar mit dem Gargerät (1) verbunden ist.

11. Gargerät nach einem der Ansprüche 7 bis 10, **gekennzeichnet durch** eine Kühlvorrichtung, zumindest zeitweise in Wirkverbindung mit dem Garprozeßfühler (11, 11') und/oder der Aufnahmevorrichtung (17, 17', 32, 33, 36, 47), zum zumindest bereichsweisen Kühlen des Garprozeßfühlers (11, 11').

## Claims

1. Method for controlling a cooking process in a cooking chamber of a cooking device having a cooking-process probe which can be at least partially inserted into a product being cooked in the cooking chamber in order to detect at least one variable of the product being cooked, **characterized in that** a check is automatically made at at least one predetermined time to detect non-insertion of the cooking-process probe, in which
- at least a conductance value, a resistance value, an induction value, a capacitance pressure characteristic and/or a characteristic of an electrical, magnetic or electromagnetic field is or are detected in order to check whether the cooking-process probe is in a waiting position in a holding apparatus provided by the cooking device or is in a measuring position in a positioning apparatus provided by an accessory part for holding the product being cooked, and/or
- at least a conductance value, a resistance value, an induction value, a capacitance value, a potential difference value, a weight value, a moisture value, a radiation characteristic, a pressure characteristic and/or a characteristic of an electrical, magnetic or electromagnetic field is or are detected in order to check whether the cooking-process probe is removed from the holding apparatus or the positioning apparatus, and/or
- radiation characteristics and/or a characteristic of an electrical, magnetic or electromagnetic field is or are detected in order to check whether the cooking-process probe is moved and/or where in the cooking device the cooking-process probe is located, and/or
- at least a conductance value, a resistance value, an induction value, a capacitance value, a potential difference value, a moisture value, a radiation characteristic, a pressure characteristic and/or a characteristic of an electrical, magnetic or electromagnetic field is or are detected in order to check whether the cooking-process probe is being gripped, and, when non-insertion is detected, at least one first warning signal is emitted, a changeover is made to an emergency program and/or the cooking program is aborted.

2. Method according to Claim 1, **characterized in that** in order to detect non-insertion of the cooking-process probe, a check is made to determine whether the cooking-process probe is connected to the cooking device.

3. Method according to Claim 1 or 2, **characterized in that** the predetermined time is determined by beginning a cooking process, ending a cooking process and/or operating, in particular opening or closing, a cooking-chamber door.

4. Method according to one of the preceding claims, **characterized in that** the detection is carried out over time and/or by a time derivative.

5. Method according to one of the preceding claims, **characterized in that**, in order to detect non-insertion of the cooking-process probe, at least one variable of the product being cooked detected by means of the cooking-process probe, a time profile of the variable of the product being cooked and/or at least one derivative of the time profile of the variable of the product being cooked is or are determined with respect to time, with the determined variable of the product being cooked, the determined time profile and/or the determined derivative preferably being compared with at least one setpoint value.

6. Method according to one of the preceding claims, **characterized in that** a second warning signal is emitted as a function of the cooking process if the cooking-process probe is not placed in the holding apparatus, in order to call on an operator to place the cooking-process probe into the holding apparatus, and/or a third warning signal is emitted if the cooking-process probe is not placed in the positioning apparatus, in order to call on an operator to place the cooking-process probe into the positioning apparatus.

7. Cooking device (1), in particular for controlling a method according to one of the preceding claims, having a cooking chamber (3) and a cooking-process probe (11, 11') which can be at least partially inserted into a product (13) being cooked in the cooking chamber (3) in order to detect at least one variable of the product being cooked, **characterized in that** non-insertion of the cooking-process probe (11, 11') into the product (13) being cooked can be detected by using
- electrical contacts (25, 25', 25" , 27, 27', 27"), a contact sensor, a pressure sensor, a light barrier, an ultrasonic sensor, a reed contact (41, 43, 53), a light sensor and/or a conductivity sensor (61) for checking whether the cooking-process probe (11, 11') is in a waiting position in a holding apparatus (17, 17') provided by the cooking device (1) or in a measuring position in a positioning apparatus (15) provided by an accessory (16) for holding the product (13) being cooked, and/or
- electrical contacts (25, 25', 25", 27, 27', 27"), a contact sensor, a pressure sensor, a light barrier, an ultrasonic sensor, a reed contact (41, 43, 53), a light sensor and/or a conductivity sensor (61) for checking whether the cooking-process probe (11, 11') has been removed from the holding apparatus (17, 17') or the positioning apparatus (15), and/or
- a light barrier, an ultrasonic sensor, a position-locating system, a movement sensor and/or a light sensor for checking where in the cooking device (1) the cooking-process probe (11, 11') is located, or whether the cooking-process probe (11, 11') has been moved, and/or
- electrical contacts (25, 25', 25" , 27, 27', 27"), a contact sensor, a pressure sensor, a light barrier, an ultrasonic sensor, a light sensor, a conductivity sensor (61) and/or a moisture sensor for checking whether the cooking-process probe (11, 11') has been gripped, and, when non-insertion is detected, at least one first warning signal can be emitted, a changeover can be made to an emergency program and/or the cooking program can be aborted, for the purpose of controlling a cooking process.

8. Cooking device according to Claim 7, **characterized in that** the sensor (25, 25', 25" , 27, 27', 27" , 41, 43, 53, 61) is contained in the holding apparatus (17, 17', 32, 33, 36, 47), the positioning apparatus (15) and/or the cooking-process probe (11, 11').

9. Cooking device according to Claim 7 or 8, **characterized by** an input unit (7) and/or an output unit (9) and/or an open-loop and/or closed-loop control unit which is operatively connected to the cooking-process probe (11, 11'), to a cooking-chamber door (5), to the sensor (25, 25', 25", 27, 27', 27", 41, 43, 53, 61), to the holding apparatus (17, 17', 32, 33, 36, 47) and/or positioning apparatus (15).

10. Cooking device according to one of Claims 7 to 9, **characterized in that** the cooking-process probe (11, 11') is permanently connected to the cooking device (1).

11. Cooking device according to one of Claims 7 to 10, **characterized by** a cooling apparatus, which is at least temporarily operatively connected to the cooking-process probe (11, 11') and/or to the holding apparatus (17, 17', 32, 33, 36, 47), for cooling at least some regions of the cooking-process probe (11, 11').

## Revendications

1. Procédé de conduite d'un processus de cuisson dans une enceinte de cuisson d'un appareil de cuisson avec une sonde de processus de cuisson à enficher au moins partiellement dans un produit à cuire, placé dans une enceinte de cuisson, pour détecter au moins une grandeur de produit à cuire, **caractérisé en ce qu'**au au moins un moment prédéterminé, une interrogation concernant la détection d'une absence d'enfichage de la sonde du processus de cuisson est effectuée automatiquement, lors de laquelle
- au moins une valeur de conductance, une valeur de résistance, une valeur d'induction, une capacité, une caractéristique de pression et/ou une caractéristique d'un champ électrique, magnétique ou électromagnétique est ou sont détectée(s) pour l'interrogation visant à savoir si la sonde de processus de cuisson se trouve dans un dispositif de logement fourni par l'appareil de cuisson, en une position d'attente, ou dans un dispositif de positionnement, fourni par une partie accessoire pour loger le produit à cuire, en une position de mesure, et/ou
- au moins une valeur de conductance, une valeur de résistance, une valeur d'induction, une valeur de capacité, une valeur de différence de potentiel, une valeur de poids, une valeur d'humidité, une caractéristique de rayonnement, une caractéristique de pression/une caractéristique d'un champ électrique, magnétique ou électromagnétique et/ou sont détectée(s) pour interroger afin de savoir si la sonde du processus de cuisson a été enlevée du dispositif de logement ou du dispositif de positionnement, et/ou
- des caractéristiques de rayonnement et/ou une caractéristique d'un champ électrique, magnétique ou électromagnétique est ou sont détectée(s) pour interroger afin de savoir si la sonde du processus de cuisson est déplacée et/ou si la sonde de processus de cuisson se trouve dans l'appareil de cuisson, et/ou
- au moins une valeur de conductance, une valeur de résistance, une valeur d'induction, une valeur de capacité, une valeur de différence de potentiel, une valeur d'humidité, une caractéristique de rayonnement, une caractéristique de pression et/ou une caractéristique d'un champ électrique, magnétique ou électromagnétique est ou sont détectée(s) pour interroger afin de savoir si la sonde du processus de cuisson est saisie, et
dans le cas où l'on détecte une absence d'enfichage, au moins un premier signal d'avertissement est envoyé, provoquant un changement pour un programme de secours et/ou une interruption du programme de cuisson.

2. Procédé selon la revendication 1, **caractérisé en ce que**, pour détecter une absence d'enfichage de la sonde de processus de cuisson, on interroge afin de savoir si la sonde de processus de cuisson est reliée à l'appareil de cuisson.

3. Procédé selon la revendication 1 ou 2, **caractérisé en ce que** le moment prédéterminé est déterminé par le début du processus de cuisson, la fin d'un processus de cuisson et/ou l'actionnement, en particulier l'ouverture ou la fermeture, d'une porte d'enceinte de cuisson.

4. Procédé selon l'une des revendications précédentes, **caractérisé en ce que** la détection est effectuée en fonction du temps et/ou avec une dérivée fonction du temps.

5. Procédé selon l'une des revendications précédentes, **caractérisé en ce que**, pour détecter une absence enfichage de la sonde de processus de cuisson, au moins une grandeur de produit à cuire, détectée par l'intermédiaire de la sonde de processus de cuisson, une allure temporelle de la grandeur de produit à cuire et/ou au moins une dérivée de l'allure temporelle de la grandeur de produit à cuire est/sont déterminée (s) en fonction du temps, sachant que, de préférence, la grandeur de produit à cuire déterminée, l'allure temporelle déterminée et/ou la dérivée déterminée est ou sont comparée(s) à au moins une valeur de consigne.

6. Procédé selon l'une des revendications précédentes, **caractérisé en ce que**, en fonction du processus de cuisson, est envoyé un deuxième signal d'avertissement lorsque la sonde du processus de cuisson n'est pas placée dans le dispositif de logement, pour demander à l'opérateur de placer la sonde de processus de cuisson dans le dispositif de logement et/ou un troisième signal d'avertissement est envoyé lorsque la sonde de processus de cuisson n'est pas placée dans le dispositif de positionnement, pour demander à un opérateur de placer la sonde de processus de cuisson dans le dispositif de positionnement.

7. Appareil de cuisson (1), en particulier pour la mise en oeuvre du procédé selon l'une des revendications précédentes, avec une enceinte de cuisson (3) et une sonde de processus de cuisson (11, 11') susceptible d'être enfichée au moins partiellement dans un produit à cuire (13) placé dans une enceinte de cuisson (3), afin de détecter au moins une grandeur de produit à cuire, **caractérisé en ce qu'**
une absence enfichage de la sonde de processus de cuisson (11, 11') dans le produit à cuire (13) est susceptible d'être détectée, par utilisation :
- de contacts électriques (25, 25', 25", 27, 27', 27"), d'un capteur de contact, d'un capteur de pression, d'une barrière photoélectrique, d'un capteur d'ultrasons, d'un contact à tiges (41, 43, 53), d'un photo-capteur et/ou d'un capteur de conductivité (61) pour interroger afin de savoir si la sonde de processus de cuisson (11, 11') se trouve dans un dispositif de logement (17, 17') fourni par l'appareil de cuisson (1), en une position d'attente, ou dans un dispositif de positionnement (15) fourni par un accessoire (16) devant loger le produit à cuire (13), en une position de mesure, et/ou
- des contacts électriques (25, 25', 25", 27, 27', 27"), un capteur de contact, un capteur de pression, une barrière photoélectrique, un capteur d'ultrasons, un contact à tiges (41, 43, 53), un photo-capteur et/ou un capteur de conductivité (61), pour interroger afin de savoir si la sonde de processus de cuisson (11, 11') a été enlevée du dispositif de logement (17, 17') ou du dispositif de positionnement (15), et/ou
- une barrière photoélectrique, un capteur d'ultrasons, un système de localisation, un capteur de déplacement et/ou un photo-capteur, pour interroger afin de savoir si la sonde de processus de cuisson (11, 11') se trouve à l'intérieur de l'appareil de cuisson (1) ou si la sonde de processus de cuisson (11, 11') a été déplacée, et/ou
- des contacts électriques (25, 25', 25", 27, 27', 27"), un capteur de contact, un capteur de pression, une barrière photoélectrique, un capteur d'ultrasons, un photo-capteur, un capteur de conductivité (61) et/ou un capteur d'humidité, pour interroger afin de savoir si la sonde de processus de cuisson (11, 11') a été saisie et, dans le cas d'absence d'enfichage, au moins un premier signal d'avertissement est susceptible d'être envoyé, un changement vers un programme de secours est susceptible d'être effectué et/ou une interruption du programme de cuisson est susceptible d'être effectuée, pour la conduite d'un processus de cuisson.

8. Appareil de cuisson selon la revendication 7, **caractérisé en ce que** le capteur (25, 25', 25", 27, 27', 27", 41, 43, 53, 61) est entouré par le dispositif de logement (17, 17', 32, 33, 36, 47), le dispositif de positionnement (15) et/ou la sonde de processus de cuisson (11, 11').

9. Appareil de cuisson selon la revendication 7 ou 8, **caractérisé par** une unité d'introduction (7) et/ou d'édition (8) et/ou une unité de commande et/ou de régulation, en liaison fonctionnelle avec la sonde de processus de cuisson (11, 11'), une porte d'enceinte de cuisson (5), le capteur (25, 25', 25", 27, 27', 27", 41, 43, 53, 61), le dispositif de logement (17, 17', 32, 33, 36, 47) et/ou le dispositif de positionnement (15).

10. Appareil de cuisson selon l'une des revendications 7 à 9, **caractérisé en ce que** la sonde du processus de cuisson (11, 11') est reliée de façon imperdable à l'appareil de cuisson (1).

11. Appareil de cuisson selon l'une des revendications 7 à 10, **caractérisé par** un dispositif de refroidissement, mis en liaison fonctionnelle, au moins par moments, avec la sonde du processus de cuisson (11, 11') et/ou le dispositif de logement (17, 17', 32, 33, 36, 47), afin de refroidir, au moins par zones, la sonde du processus de cuisson (11, 11').
